(19) Europäisches Patentamt
European Patent Office
Office européen des brevets

(11) **EP 2 976 305 B1**

(12) **FASCICULE DE BREVET EUROPEEN**

(45) Date de publication et mention
de la délivrance du brevet:
**11.01.2017 Bulletin 2017/02**

(21) Numéro de dépôt: **14709319.9**

(22) Date de dépôt: **12.03.2014**

(51) Int Cl.:
*C03C 3/087* (2006.01)    *C03C 4/10* (2006.01)

(86) Numéro de dépôt international:
**PCT/EP2014/054805**

(87) Numéro de publication internationale:
**WO 2014/146939 (25.09.2014 Gazette 2014/39)**

(54) **FEUILLE DE VERRE À HAUTE TRANSMISSION AUX RAYONNEMENTS INFRAROUGES**

GLASSCHEIBE MIT HOHER INFRAROTSTRAHLUNGSTRANSMISSION

GLASS SHEET HAVING HIGH INFRARED RADIATION TRANSMISSION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.03.2013 BE 201300180**

(43) Date de publication de la demande:
**27.01.2016 Bulletin 2016/04**

(73) Titulaire: **AGC Glass Europe
1348 Louvain-la-Neuve (BE)**

(72) Inventeurs:
• **LAMBRICHT, Thomas
B-1360 Perwez (BE)**
• **DOGIMONT, Audrey
B-1495 Sart-Dames-Avelines (BE)**

(74) Mandataire: **Bayot, Daisy
AGC Glass Europe
Technovation Centre
IP Department
Rue Louis Blériot, 12
6041 Gosselies (BE)**

(56) Documents cités:
WO-A1-2012/124758    WO-A1-2012/128180
WO-A1-2013/021975    US-A1- 2007 161 492

**Description**

**1. Domaine de l'invention**

La présente invention concerne une feuille de verre présentant une haute transmission aux rayonnements infrarouges. Le domaine général de l'invention est celui des panneaux tactiles optiques montés au-dessus de zones de surfaces d'affichage.

Grâce à sa haute transmission aux rayonnements infrarouges (IR), la feuille de verre selon l'invention peut en effet être avantageusement utilisée dans un écran ou panneau ou tablette tactile (« touchscreen » ou « touchpanel » ou « touchpad ») utilisant la technologie optique dite de « Planar Scatter Detection » (PSD) ou encore de « Frustrated total internal reflection » (FTIR) (ou tout autre technologie nécessitant une haute transmission aux IR) pour détecter la position d'un ou plusieurs objets (par exemple, un doigt ou un stylet) sur une surface de ladite feuille.

L'invention a dès lors également trait à un écran, un panneau ou une tablette tactile comprenant une telle feuille de verre.

**2. Solutions de l'art antérieur**

Les technologies PSD et FTIR permettent d'obtenir des écrans/panneaux tactiles à détections multiples qui sont peu onéreux et qui peuvent avoir une surface tactile relativement importante (par exemple, de 3 à 100 pouces) tout en ayant une faible épaisseur.

Ces deux technologies impliquent :

(i) l'injection d'un rayonnement infrarouge (IR), grâce à des LED's par exemple, dans un substrat transparent aux infrarouges à partir d'un ou plusieurs bords/tranches ;

(ii) la propagation du rayonnement infrarouge à l'intérieur dudit substrat (qui joue alors le rôle de guide d'onde), par l'intermédiaire d'un phénomène optique de réflexion totale interne (aucun rayonnement ne «sort» du substrat);

(iii) le contact de la surface du substrat avec un objet quelconque (par exemple, un doigt ou un stylet) entraînant une perturbation locale par diffusion du rayonnement dans toutes les directions ; certains des rayons déviés vont ainsi pouvoir « sortir » du substrat.

Dans la technologie FTIR, les rayons déviés forment un point lumineux infrarouge sur la surface inférieure du substrat, opposée à la surface tactile. Ceux-ci sont vus par une caméra spéciale située en dessous du dispositif.

La technologie PSD implique, quant à elle, deux étapes supplémentaires à la suite des étapes (i)-(iii) :

(iv) l'analyse par un détecteur du rayonnement IR résultant au niveau du bord du substrat; et

(v) le calcul par des algorithmes de la/des position(s) du/des objet(s) en contact avec la surface, à partir du rayonnement détecté. Cette technologie est notamment exposée dans le document US2013021300A1.

A la base, le verre est un matériau de choix pour les panneaux tactiles du fait de ses propriétés mécaniques, de sa durabilité, de sa résistance à la griffe, de sa clarté optique et car il peut être renforcé chimiquement ou thermiquement. Le document WO 2012/128180 décrit un verre pour un panneau tactile.

Dans le cas de panneaux de verre utilisés pour la technologie PSD ou FTIR et de surface très importante et donc de longueur/largeur relativement grande, le trajet optique du rayonnement IR injecté est long. Dans ce cas, l'absorption du rayonnement IR par le matériau du verre joue donc significativement sur la sensibilité du panneau tactile qui peut alors diminuer de façon indésirable dans la longueur/largeur du panneau. Dans le cas de panneaux de verre utilisés pour la technologie PSD ou FTIR et de surface plus petite et donc avec un trajet optique du rayonnement IR injecté plus court, l'absorption du rayonnement IR par le matériau du verre joue également, en particulier sur la consommation énergétique du dispositif intégrant le panneau de verre.

Ainsi, une feuille de verre hautement transparente aux rayonnements infrarouges est d'une grand utilité dans ce contexte, afin de garantir une sensibilité intacte ou suffisante sur la totalité de la surface tactile lorsque cette surface est importante. En particulier, une feuille de verre avec un coefficient d'absorption à la longueur d'onde de 1050 nm, utilisée généralement dans ces technologies, égal ou même inférieur à 1 m$^{-1}$ est idéal.

Afin d'obtenir une haute transmission dans les infrarouges (et dans le visible), il est connu de diminuer la teneur totale en fer dans le verre (exprimée en terme de $Fe_2O_3$ selon la pratique standard dans le domaine) en obtenant des verres à basse teneur en fer (ou « low iron »). Les verres de types silicates contiennent toujours du fer car celui-ci est présent comme impureté dans la plupart des matières premières utilisées (sable, calcaire, dolomie...). Le fer existe dans la structure du verre sous la forme d'ions ferriques $Fe^{3+}$ et d'ions ferreux $Fe^{2+}$. La présence d'ions ferriques $Fe^{3+}$ confère

au verre une légère absorption de la lumière visible de faible longueur d'onde et une plus forte absorption dans le proche ultraviolet (bande d'absorption centrée sur 380 nm), tandis que la présence d'ions ferreux $Fe^{2+}$ (parfois exprimée en oxyde FeO) provoque une forte absorption dans le proche infrarouge (bande d'absorption centrée sur 1050 nm). Ainsi, l'augmentation de la teneur en fer totale (sous ses deux formes) accentue l'absorption dans le visible et l'infrarouge. De plus, une forte concentration en ions ferreux $Fe^{2+}$ entraîne une diminution de la transmission dans l'infrarouge (en particulier, le proche infrarouge). Toutefois, pour atteindre un coefficient d'absorption à la longueur d'onde de 1050 nm suffisamment faible pour les applications tactiles uniquement en jouant sur la teneur en fer total, cela nécessiterait une diminution tellement importante de cette teneur en fer total, que (i) soit cela entraînerait des coûts de production beaucoup trop élevés, provenant du besoin de matières premières très pures (qui parfois même n'existent pas suffisamment pures), (ii) soit cela poserait des problèmes de production (notamment l'usure prématurée du four et/ou des difficultés de chauffe du verre dans le four).

Il est également connu, pour augmenter davantage la transmission du verre, d'oxyder le fer présent dans le verre, c'est-à-dire de diminuer la teneur en ions ferreux au profit de la teneur en ions ferriques. Le degré d'oxydation d'un verre est donné par son rédox, défini comme le rapport en poids d'atome de $Fe^{2+}$ par rapport au poids total des atomes de fer présents dans le verre, $Fe^{2+}$/Fe total.

Afin de diminuer le rédox du verre, il est connu d'ajouter au batch de matières premières un composant oxydant. Cependant, la plupart des oxydants connus (sulfates, nitrates, ...) ont un pouvoir oxydant qui n'est pas suffisamment fort pour atteindre les valeurs de transmission IR recherchées pour l'application de panneaux tactiles utilisant la technologie FTIR ou PSD.

### 3. Objectifs de l'invention

L'invention, dans au moins un de ses modes de réalisation, a pour objectif de fournir une feuille de verre avec une haute transmission aux rayonnements infrarouges. En particulier, l'invention a pour objectif de fournir une feuille de verre avec une haute transmission aux rayonnements infrarouges proches.

Un autre objectif de l'invention, dans au moins un de ses modes de réalisation, est de fournir une feuille de verre qui, lorsqu'elle est utilisée comme surface tactile dans des écrans, panneaux ou tablettes tactiles de grandes dimensions, n'entraîne pas ou peu de perte de sensibilité de la fonction tactile.

Un autre objectif de l'invention, dans au moins un de ses modes de réalisation, est de fournir une feuille de verre qui, lorsqu'elle est utilisée comme surface tactile dans des écrans, panneaux ou tablettes tactiles de dimensions plus modestes, est favorable à la consommation énergétique du dispositif.

Un autre objectif de l'invention, dans au moins un de ses modes de réalisation, est de fournir une feuille de verre avec une haute transmission aux rayonnements infrarouges et avec une esthétique acceptable pour l'application choisie.

Finalement, l'invention a également pour objectif de fournir une feuille de verre avec une haute transmission aux rayonnements infrarouges et qui est peu onéreuse à produire.

### 4. Exposé de l'invention

L'invention concerne l'utilisation d'une feuille de verre ayant une composition qui comprend, en une teneur exprimée en pourcentages en poids total de verre :

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5% |
| Fer total (exprimé sous forme de $Fe_2O_3$) | 0,002 - 0,06%. |

Conformément à un mode de réalisation particulier, ladite composition comprend en outre une teneur en cobalt (exprimée sous forme de CoO) allant de 0,001 à 1% en poids par rapport au poids total du verre, dans un écran ou panneau ou tablette tactile utilisant la technologie optique FTIR ou PSD pour détecter la position d'un ou plusieurs objets sur une surface de ladite feuille.

Ainsi, l'invention repose sur une approche tout à fait nouvelle et inventive car elle permet de résoudre le problème technique posé. Les inventeurs ont en effet mis en évidence, de manière surprenante, qu'il était possible, en combinant dans une composition de verre une basse teneur en fer et du cobalt, spécialement connu en tant que colorant puissant dans des compositions de verres colorés, dans une gamme de teneurs spécifique, d'obtenir une feuille de verre très transparente dans l'IR, sans un impact trop négatif sur son esthétique, sa couleur.

Dans l'ensemble du présent texte, lorsqu'une gamme est indiquée, les extrémités sont incluses. En outre, toutes les valeurs entières et sous-domaines dans une gamme numérique sont expressément inclues comme si explicitement écrites. Dans l'ensemble du présent texte également, les valeurs de teneur en pourcentages sont des valeurs pondérales, exprimées par rapport au poids total du verre.

D'autres caractéristiques et avantages de l'invention apparaîtront plus clairement à la lecture de la description suivante.

Par verre au sens de l'invention, on entend un matériau totalement amorphe, excluant donc tout matériau cristallin, même partiellement (comme par exemple, les matériaux vitro-cristallins ou vitrocéramiques).

La feuille de verre selon l'invention est faite de verre pouvant appartenir à diverses catégories. Le verre peut ainsi être un verre de type silico-sodo-calcique, alumino-silicate, boro-silicate,... De manière préférée et pour des raisons de coûts plus faibles de production, la feuille de verre selon l'invention est une feuille de verre silico-sodo-calcique. Selon ce mode de réalisation préféré, la composition de la feuille de verre peut comprendre, en une teneur exprimée en pourcentages en poids total de verre :

| | |
|---|---|
| $SiO_2$ | 60 - 75% |
| $Al_2O_3$ | 0 - 4% |
| $B_2O_3$ | 0 - 4% |
| CaO | 0 - 15% |
| MgO | 0 - 10% |
| $Na_2O$ | 5 - 20% |
| $K_2O$ | 0 - 10% |
| BaO | 0 - 5% |
| Fer total (exprimé sous forme de $Fe_2O_3$) | 0,002 - 0,06%. |

La feuille de verre selon l'invention peut être une feuille de verre obtenue par un procédé de flottage, d'étirage, de laminage ou tout autre procédé connu pour fabriquer une feuille de verre au départ d'une composition de verre en fusion. Selon un mode de réalisation préférentiel selon l'invention, la feuille de verre est une feuille de verre flotté. Par feuille de verre flotté, on entend une feuille de verre formée par le procédé de flottage (ou « float »), consistant à déverser le verre en fusion sur un bain d'étain fondu, sous conditions réductrices. Une feuille de verre flotté comporte, de façon connue, une face dite « face étain », c'est-à-dire une face enrichie en étain dans la masse du verre proche de la surface de la feuille. Par enrichissement en étain, on entend une augmentation de la concentration en étain par rapport à la composition du verre à coeur qui peut être substantiellement nulle (exempte d'étain) ou non.

La feuille de verre selon l'invention peut avoir des dimensions diverses et relativement importantes. Elle peut, par exemple, avoir des dimensions allant jusqu'à 3,21 m x 6 m ou 3,21 m x 5,50 m ou 3,21 m x 5,10 m ou 3,21 m x 4,50 m (feuille de verre appelée « PLF ») ou encore, par exemple, 3,21 m x 2,55 m ou 3,21 m x 2,25 m (feuille de verre appelée « DLF »).

La feuille de verre selon l'invention peut avoir une épaisseur variant entre 0,1 et 25 mm. Avantageusement, dans le cas de l'application de panneaux tactiles, la feuille de verre selon l'invention peut avoir une épaisseur variant entre 0,1 et 6 mm. De manière préférée, dans le cas de l'application d'écrans tactiles, pour des raisons de poids, l'épaisseur de la feuille de verre selon l'invention est de 0,1 à 2,2 mm.

Selon l'invention, la composition de l'invention comprend une teneur en fer total (exprimé en terme de $Fe_2O_3$) allant de 0,002 à 0,06% en poids par rapport au poids total du verre. Une teneur en fer total (exprimé sous forme de $Fe_2O_3$) inférieure ou égale à 0,06% en poids permet d'augmenter davantage la transmission IR de la feuille de verre. La valeur minimale permet de ne pas trop pénaliser le coût du verre car de si faibles valeurs en fer nécessitent souvent des matières premières très pures onéreuses ou bien une purification de celles-ci. De manière préférée, la composition comprend une teneur en fer total (exprimé sous forme de $Fe_2O_3$) allant de 0,002 à 0,04% en poids par rapport au poids total du verre. De manière toute préférée, la composition comprend une teneur en fer total (exprimé sous forme de $Fe_2O_3$) allant de 0,002 à 0,02% en poids par rapport au poids total du verre.

Selon un mode de réalisation de l'invention, la composition de l'invention comprend une teneur en cobalt (exprimée sous forme de CoO) allant de 0,005 à 1% en poids par rapport au poids total du verre.

Selon un mode de réalisation avantageux de l'invention, la composition de l'invention comprend une teneur en cobalt (exprimée sous forme de CoO) allant de 0,001 à 0,5% en poids par rapport au poids total du verre et, de manière préférée, de 0,001 à 0,2% ou encore de 0,001 à 0,1%, voire même de 0,001 à 0,05% ou encore de 0,001 à 0,02%. De telles gammes de teneurs en cobalt permet d'obtenir une transmission importante dans l'IR sans trop pénaliser l'aspect esthétique, la coloration de la feuille de verre.

Selon un autre mode de réalisation avantageux de l'invention, la composition de l'invention comprend une teneur en cobalt (exprimée sous forme de CoO) allant de 0,005 à 0,5% en poids par rapport au poids total du verre et, de manière préférée, de 0,005 à 0,2% ou de 0,005 à 0,1%, ou encore mieux de 0,005 à 0,05%. De manière toute préférée, la composition de l'invention comprend une teneur en cobalt (exprimée sous forme de CoO) allant de 0,002 à 0,1% ou de 0,002 à 0,05% ou encore mieux de 0,002 à 0,02%. De telles gammes de teneurs en cobalt permet d'obtenir une transmission encore meilleure dans l'IR.

Selon un autre mode de réalisation de l'invention, la composition comprend une teneur en $Fe^{2+}$(exprimée sous forme de FeO) inférieure à 20 ppm. Cette gamme de teneurs permet d'obtenir des propriétés très satisfaisantes et en particulier, en termes de transmission des IR. De manière préférée, la composition comprend une teneur en $Fe^{2+}$(exprimée sous forme de FeO) inférieure à 10 ppm. De manière toute préférée, la composition comprend une teneur en $Fe^{2+}$(exprimée sous forme de FeO) inférieure à 5 ppm.

Selon l'invention, la feuille de verre possède une haute transmission des rayonnements IR. Plus précisément, la feuille de verre de la présente invention possède une haute transmission des rayonnements dans le proche infrarouge.

Pour quantifier la bonne transmission du verre dans le domaine des infrarouges, dans la présente description, on utilisera le coefficient d'absorption à la longueur d'onde de 1050 nm, qui doit dès lors être le plus faible possible afin d'obtenir une bonne transmission. Le coefficient d'absorption est défini par le rapport entre l'absorbance et la longueur du chemin optique parcouru par un rayonnement électromagnétique dans un milieu donné. Il s'exprime en m$^{-1}$. Il est donc indépendant de l'épaisseur du matériau mais il est fonction de la longueur d'onde du rayonnement absorbé et de la nature chimique du matériau.

Dans le cas du verre, le coefficient d'absorption ($\mu$) à une longueur d'onde $\lambda$, choisie peut être calculé à partir d'une mesure en transmission (T) ainsi que de l'indice de réfraction n du matériau (*thick* = épaisseur), les valeurs de n, p et T étant fonction de la longueur d'onde $\lambda$, choisie :

$$\mu = -\frac{1}{thick} . ln\left[\frac{-(1-\rho)^2 + \sqrt{(1-\rho)^4 + 4.T^2.\rho^2}}{2.T.\rho^2}\right]$$

avec p = (n-1)$^2$/(n+1)$^2$

Avantageusement, la feuille de verre selon l'invention a un coefficient d'absorption à la longueur d'onde de 1050 nm inférieur à 5 m$^{-1}$. De préférence, la feuille de verre selon l'invention a un coefficient d'absorption à la longueur d'onde de 1050 nm inférieur ou égal à 2 m$^{-1}$. De manière toute préférée, la feuille de verre selon l'invention a un coefficient d'absorption à la longueur d'onde de 1050 nm inférieur ou égal à 1 m$^{-1}$.

Avantageusement également, la feuille de verre selon l'invention a un coefficient d'absorption à la longueur d'onde 950 nm inférieur à 5 m-1. De préférence, la feuille de verre selon l'invention a un coefficient d'absorption à la longueur d'onde de 950 nm inférieur ou égal à 2 m-1. De manière toute préférée, la feuille de verre selon l'invention a un coefficient d'absorption à la longueur d'onde de 950 nm inférieur ou égal à 1 m-1.

Avantageusement également, la feuille de verre selon l'invention a un coefficient d'absorption à la longueur d'onde de 850 nm inférieur à 5 m-1. De préférence, la feuille de verre selon l'invention a un coefficient d'absorption à la longueur d'onde de 850 nm inférieur ou égal à 2 m-1. De manière toute préférée, la feuille de verre selon l'invention a un coefficient d'absorption à la longueur d'onde de 850 nm inférieur ou égal à 1 m-1.

Selon un mode de réalisation de l'invention, la composition de la feuille de verre peut comprendre, en plus des impuretés contenues notamment dans les matières premières, une faible proportion d'additifs (tels que des agents aidant la fusion ou l'affinage du verre) ou d'éléments provenant de la dissolution des réfractaires constituant les fours de fusion.

Selon un mode de réalisation avantageux de l'invention, la composition de la feuille de verre peut comprendre en outre un ou plusieurs autre(s) colorant(s), en quantité adaptée en fonction de l'effet recherché. Ce(ces) colorant(s) peu(ven)t servir, par exemple, à « neutraliser » la couleur générée par la présence du cobalt et rendre ainsi la coloration du verre de l'invention plus neutre, incolore. Alternativement, ce(ces) colorants peu(ven)t servir à obtenir une couleur recherchée et autre que celle pouvant être générée par la présence du cobalt.

Selon un autre mode de réalisation avantageux de l'invention, combinable au mode de réalisation précédent, la feuille de verre peut être revêtue d'une couche ou d'un film qui permet de modifier ou neutraliser la couleur pouvant être générée par la présence du cobalt (par exemple, un film de PVB coloré).

La feuille de verre selon l'invention peut avantageusement être trempée chimiquement ou thermiquement.

Selon un mode de réalisation de l'invention, la feuille de verre est revêtue d'au moins une couche mince transparente et conductrice de l'électricité. Une couche mince transparente et conductrice selon l'invention peut, par exemple, être une couche à base de $SnO_2$:F, de $SnO_2$:Sb ou d'ITO (oxyde d'indium et d'étain), ZnO:Al ou encore ZnO:Ga.

Selon un autre mode de réalisation avantageux de l'invention, la feuille de verre est revêtue d'au moins une couche antiréfléchissante (ou anti-reflet). Ce mode de réalisation est évidemment avantageux dans le cas d'une utilisation de la feuille de verre de l'invention comme face avant d'un écran. Une couche antiréfléchissante selon l'invention peut, par exemple, être une couche à base de silice poreuse à bas indice de réfraction ou elle peut être constituée de plusieurs strates (empilement), notamment un empilement de couches de matériau diélectrique alternant des couches à bas et hauts indices de réfraction et se terminant par une couche à bas indice de réfraction.

Selon un autre mode de réalisation, la feuille de verre est revêtue d'au moins une couche anti-empreinte ou a été traitée de manière à réduire/empêcher les empreintes de se marquer. Ce mode de réalisation est également avantageux dans le cas d'une utilisation de la feuille de verre de l'invention comme face avant d'un écran tactile. Une telle couche ou un tel traitement peut être combinée à une couche mince transparente et conductrice de l'électricité, déposée sur la face opposée. Une telle couche peut être combinée à une couche antiréfléchissante déposée sur la même face, la couche anti-empreinte étant à l'extérieur de l'empilement et recouvrant donc la couche antiréfléchissante.

En fonction des applications et/ou des propriétés désirées, d'autres couches peuvent être déposées sur l'une et/ou l'autre face de la feuille de verre selon l'invention.

L'invention concerne également un écran ou un panneau ou une tablette tactile, comprenant au moins une feuille de verre selon l'invention, définissant une surface tactile. Selon ce mode de réalisation, l'écran ou le panneau ou la tablette tactile utilise avantageusement la technologie optique FTIR ou PSD. En particulier, pour un écran, la feuille de verre est avantageusement montée au-dessus d'une surface d'affichage.

Finalement, grâce à sa haute transmission aux rayonnements infrarouges, la feuille de verre selon l'invention peut être avantageusement utilisée dans un écran ou panneau ou tablette tactile (« touchscreen » ou « touchpanel » ou « touchpad ») utilisant la technologie optique dite de « Planar Scatter Detection » (PSD) ou encore de « Frustrated total internal reflection » (FTIR) pour détecter la position d'un ou plusieurs objets (par exemple, un doigt ou un stylet) sur une surface de ladite feuille.

Exemples

Les matières premières ont été mélangées sous forme de poudre et placées en creuset pour la fusion, selon la composition de base précisée dans le tableau ci-dessous.

| Composition de base | Teneur [% en poids] |
|---|---|
| $SiO_2$ | 72 |
| CaO | 9 |
| $K_2O$ | 0,3 |
| $Na_2O$ | 14 |
| $SO_3$ | 0,3 |
| $Al_2O_3$ | 0,8 |
| MgO | 4,2 |
| Fer total (exprimé en $Fe_2O_3$) | 0,01 |

Deux échantillons ont été préparés avec une quantité de cobalt variable et la composition de base maintenue fixe. L'échantillon 1 (comparatif) correspond à un verre de l'état de la technique, à basse teneur en fer et ne contenant pas de cobalt (et dit « extra-clair »). L'échantillon 2 correspond à une composition de feuille de verre selon l'invention.

Les propriétés optiques de chaque échantillon de verre sous forme de feuille ont été déterminées et en particulier, le coefficient d'absorption aux longueurs d'onde de 1050, 950 et 850 nm a été déterminé via une mesure en transmission sur un spectrophotomètre Perkin Elmer lambda 950 équipé d'une sphère d'intégration de 150 mm de diamètre, l'échantillon étant placé au port d'entrée de la sphère pour la mesure.

Le tableau ci-dessous présente la variation ($\Delta$) du coefficient d'absorption aux longueurs d'onde de 1050, 950 et 850 nm obtenue pour l'échantillon 2 selon l'invention, en relatif par rapport à la valeur correspondante pour l'échantillon 1 de référence.

| | ppm de cobalt (exprimé sous forme de CoO) | Δ coefficient d'absorption à 1050nm (m$^{-1}$) | Δ coefficient d'absorption à 950nm (m$^{-1}$) | Δ coefficient d'absorption à 850nm (m$^{-1}$) |
|---|---|---|---|---|
| *Echantillon 2 (invention)* | 15 | 0% | -14% | -15% |

Ces résultats montrent que l'ajout de cobalt, dans une gamme de teneurs selon l'invention, permet de diminuer le coefficient d'absorption aux longueurs d'onde de 950 et 850 nm, et donc de manière générale, de diminuer l'absorption des rayonnements infrarouges proches.

## Revendications

1. Utilisation d'une feuille de verre ayant une composition qui comprend, en une teneur exprimée en pourcentages en poids total de verre :

| | |
|---|---|
| SiO$_2$ | 55 - 78% |
| Al$_2$O$_3$ | 0 - 18% |
| B$_2$O$_3$ | 0 - 18% |
| Na$_2$O | 5 - 20% |
| CaO | 0 - 15% |
| MgO | 0 - 10% |
| K$_2$O | 0 - 10% |
| BaO | 0 - 5% |
| Fer total, exprimé sous forme de Fe$_2$O$_3$, | 0,002 - 0,06% ; |

ladite composition comprenant une teneur en cobalt, exprimée sous forme de CoO, allant de 0,001 à 1% en poids par rapport au poids total du verre ; dans un écran ou panneau ou tablette tactile utilisant la technologie optique FTIR ou PSD pour détecter la position d'un ou plusieurs objets sur une surface de ladite feuille

2. Utilisation d'une feuille de verre selon la revendication précédente, **caractérisée en ce que** la composition comprend une teneur en cobalt , exprimée sous forme de CoO, allant de 0,005 à 0,5 % en poids par rapport au poids total du verre.

3. Utilisation d'une feuille de verre selon la revendication 1, **caractérisée en ce que** la composition comprend une teneur en cobalt, exprimée sous forme de CoO, allant de 0,001 à 0,1% en poids par rapport au poids total du verre.

4. Utilisation d'une feuille de verre selon la revendication précédente, **caractérisée en ce que** la composition comprend une teneur en cobalt , exprimée sous forme de CoO, allant de 0,002 à 0,05% en poids par rapport au poids total du verre.

5. Utilisation d'une feuille de verre selon la revendication précédente, **caractérisée en ce que** la composition comprend une teneur en cobalt, exprimée sous forme de CoO, allant de 0,002 à 0,02% en poids par rapport au poids total du verre.

6. Utilisation d'une feuille de verre selon l'une des revendications précédentes, **caractérisée en ce que** la composition comprend une teneur en fer total, exprimée sous forme de Fe$_2$O$_3$, de 0,002 à 0,04% en poids par rapport au poids total du verre.

7. Utilisation d'une feuille de verre selon la revendication précédente, **caractérisée en ce que** la composition comprend une teneur en fer total, exprimée sous forme de Fe$_2$O$_3$, de 0,002 à 0,02% en poids par rapport au poids total du verre.

8. Utilisation d'une feuille de verre selon l'une des revendications précédentes, **caractérisée en ce que** la composition comprend une teneur en $Fe^{2+}$, exprimée sous forme de FeO, inférieure à 20 ppm.

9. Utilisation d'une feuille de verre selon la revendication précédente, **caractérisée en ce que** la composition comprend une teneur en $Fe^{2+}$, exprimée sous forme de FeO, inférieure à 10 ppm.

10. Utilisation d'une feuille de verre selon la revendication précédente, **caractérisée en ce que** la composition comprend une teneur en $Fe^{2+}$, exprimée sous forme de FeO, inférieure à 5 ppm.

11. Utilisation d'une feuille de verre selon l'une des revendications précédentes, **caractérisée en ce qu'**elle est revêtue d'au moins une couche anti-empreinte ou a été traitée de manière à réduire/empêcher les empreintes de se marquer.

**Patentansprüche**

1. Verwendung einer Glasscheibe mit einer Zusammensetzung, welche einen folgenden in Gewichtsprozenten in Bezug auf das Gesamtgewicht von Glas ausgedrückten Gehalt aufweist:

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5% |

Gesamteisen, ausgedrückt in Form von $Fe_2O_3$, 0,002 -0,06%;
wobei die Zusammensetzung einen Cobaltgehalt, ausgedrückt in Form von CoO, im Bereich von 0,001 bis 1 Gew.-% in Bezug auf das Gesamtgewicht von Glas aufweist; in einem Bildschirm oder Panel oder berührungsempfindlichen Tablet, welches die optische Technologie FTIR oder PSD verwendet, um die Position eines oder mehrerer Objekte auf einer Oberfläche der Scheibe zu erfassen.

2. Verwendung einer Glasscheibe nach dem vorhergehenden Anspruch, **dadurch gekennzeichnet, dass** die Zusammensetzung einen Cobaltgehalt, ausgedrückt in Form von CoO, im Bereich von 0,005 bis 0,5 Gew.-% in Bezug auf das Gesamtgewicht von Glas aufweist.

3. Verwendung einer Glasscheibe nach Anspruch 1, **dadurch gekennzeichnet, dass** die Zusammensetzung einen Cobaltgehalt, ausgedrückt in Form von CoO, im Bereich von 0,001 bis 0,1 Gew.-% in Bezug auf das Gesamtgewicht von Glas aufweist.

4. Verwendung einer Glasscheibe nach dem vorhergehenden Anspruch, **dadurch gekennzeichnet, dass** die Zusammensetzung einen Cobaltgehalt, ausgedrückt in Form von CoO, im Bereich von 0,002 bis 0,05 Gew.-% in Bezug auf das Gesamtgewicht von Glas aufweist.

5. Verwendung einer Glasscheibe nach dem vorhergehenden Anspruch, **dadurch gekennzeichnet, dass** die Zusammensetzung einen Cobaltgehalt, ausgedrückt in Form von CoO, im Bereich von 0,002 bis 0,02 Gew.-% in Bezug auf das Gesamtgewicht von Glas aufweist.

6. Verwendung einer Glasscheibe nach einem der vorhergehenden Ansprüche, **dadurch gekennzeichnet, dass** die Zusammensetzung einen Gesamteisengehalt, ausgedrückt in Form von $Fe_2O_3$, im Bereich von 0,002 bis 0,04 Gew.-% in Bezug auf das Gesamtgewicht von Glas aufweist.

7. Verwendung einer Glasscheibe nach dem vorhergehenden Anspruch, **dadurch gekennzeichnet, dass** die Zusammensetzung einen Gesamteisengehalt, ausgedrückt in Form von $Fe_2O_3$, im Bereich von 0,002 bis 0,02 Gew.-% in Bezug auf das Gesamtgewicht von Glas aufweist.

**8.** Verwendung einer Glasscheibe nach einem der vorhergehenden Ansprüche, **dadurch gekennzeichnet, dass** die Zusammensetzung einen $Fe^{2+}$-Gehalt, ausgedrückt in Form von $FeO_1$ von weniger als 20 ppm aufweist.

**9.** Verwendung einer Glasscheibe nach dem vorhergehenden Anspruch, **dadurch gekennzeichnet, dass** die Zusammensetzung einen $Fe^{2+}$-Gehalt, ausgedrückt in Form von $FeO_1$ von weniger als 10 ppm aufweist.

**10.** Verwendung einer Glasscheibe nach dem vorhergehenden Anspruch, **dadurch gekennzeichnet, dass** die Zusammensetzung einen $Fe^{2+}$-Gehalt, ausgedrückt in Form von $FeO_1$ von weniger als 5 ppm aufweist.

**11.** Verwendung einer Glasscheibe nach einem der vorhergehenden Ansprüche, **dadurch gekennzeichnet, dass** sie mit mindestens einer abdruckabweisenden Schicht beschichtet ist oder derartig behandelt worden ist, um Abdrücke daran zu hindern, sich zu manifestieren, oder sie zu verringern.

**Claims**

**1.** Use of a glass sheet having a composition that comprises, in an amount expressed in percentages by total weight of glass:

| | |
|---|---|
| $SiO_2$ | 55 - 78% |
| Al2O3 | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5% |
| Total iron, expressed in $Fe_2O_3$ form, | 0.002 - 0.06%; |

said composition comprising a cobalt content, expressed in CoO form, ranging from 0.001 to 1% by weight relative to the total weight of the glass; in a touch screen or touch panel or touch pad using FTIR or PSD optical technology to detect the position of one or more objects on a surface of said sheet.

**2.** Use of a glass sheet according to the preceding claim, **characterized in that** the composition comprises a cobalt content, expressed in CoO form, ranging from 0.005 to 0.5% by weight relative to the total weight of the glass.

**3.** Use of a glass sheet according to Claim 1, **characterized in that** the composition comprises a cobalt content, expressed in CoO form, ranging from 0.001 to 0.1% by weight relative to the total weight of the glass.

**4.** Use of a glass sheet according to the preceding claim, **characterized in that** the composition comprises a cobalt content, expressed in CoO form, ranging from 0.002 to 0.05% by weight relative to the total weight of the glass.

**5.** Use of a glass sheet according to the preceding claim, **characterized in that** the composition comprises a cobalt content, expressed in CoO form, ranging from 0.002 to 0.02% by weight relative to the total weight of the glass.

**6.** Use of a glass sheet according to one of the preceding claims, **characterized in that** the composition comprises a total iron content, expressed in $Fe_2O_3$ form, of 0.002 to 0.04% by weight relative to the total weight of the glass.

**7.** Use of a glass sheet according to the preceding claim, **characterized in that** the composition has a total iron content, expressed in $Fe_2O_3$ form, of 0.002 to 0.02% by weight relative to the total weight of the glass.

**8.** Use of a glass sheet according to one of the preceding claims, **characterized in that** the composition has an $Fe^{2+}$ content, expressed in FeO form, lower than 20 ppm.

9. Use of a glass sheet according to the preceding claim, **characterized in that** the composition has an $Fe^{2+}$ content, expressed in FeO form, lower than 10 ppm.

10. Use of a glass sheet according to the preceding claim, **characterized in that** the composition has an $Fe^{2+}$ content, expressed in FeO form, lower than 5 ppm.

11. Use of a glass sheet according to one of the preceding claims, **characterized in that** it is coated with at least one anti-smudge layer or has been treated so as to limit/prevent smudges from soiling it.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013021300 A1

- WO 2012128180 A